# EUROPEAN PATENT APPLICATION

(11) **EP 3 889 198 A1**
(43) Date of publication of application: **06.10.2021**
(21) Application number: 21164989.2
(22) Date of filing: 25.03.2021
(51) Int. Cl.: C08G 18/38, C08G 18/76, C08L 75/04, G02B 1/04

(54) **POLYMERIZABLE COMPOSITION FOR OPTICAL MATERIALS, TRANSPARENT RESIN AND METHOD FOR PRODUCING THE SAME, AND LENS BASE MATERIAL AND METHOD FOR PRODUCING THE SAME**

(30) Priority: 31.03.2020 JP 2020064153
(71) Applicant: Hoya Lens Thailand Ltd., Pathumthani 12130 (TH)
(72) Inventor: ARAI, Yuko, Tokyo, 1608347 (JP); NAGASAWA, Takumi, Tokyo, 1608347 (JP); IGARI, Masahito, Tokyo, 1608347 (JP)
(74) Representative: Beckmann, Claus

(57) **Abstract**

The present invention provides a polymerizable composition for optical materials that can achieve a cured product with a high refractive index and a small yellowness index ΔYI even though an aromatic polyisocyanate is used, a transparent resin and a method for producing the same using the polymerizable composition, a lens base material and a method for producing the same using the polymerizable composition, and the like. A polymerizable composition for optical materials, at least including an aromatic polyisocyanate, a polyene compound having two or more ethylenically unsaturated double bonds, and 30 to 80% by mass of a polythiol having three or more mercapto groups; wherein the polymerizable composition has a mercapto group/(isocyanate group + ethylenically unsaturated double bond) equivalent ratio of 1.10 to 1.70.

## Description

### BACKGROUND OF THE INVENTION

### Field of the Invention

The present invention relates to a polymerizable composition for optical materials, a transparent resin and a method for producing the same, and a lens base material and a method for producing the same.

### Description of the Related Art

Conventionally, it has been known that plastic lenses with a high refractive index can be obtained by allowing polyisocyanate compounds to react with polythiol compounds. These types of plastic materials are rapidly becoming popular for optical elements such as spectacle lenses and camera lenses because they are lighter and less fragile compared to inorganic lenses.

For example, Japanese Patent Laid-Open No. 60-199016 discloses a method for producing a polyurethane-based plastic lens with a high refractive index by heating a composition obtained by mixing an aliphatic polyisocyanate compound with an aliphatic polythiol compound such as pentaerythritol tetrakis-(thioglycolate) and trimethylolpropane tris-(thioglycolate).

In addition, Japanese Patent Laid-Open No. 63-046213 discloses a method in which a tetrafunctional polythiol compound such as pentaerythritol tetrakis(thioglycolate) and pentaerythritol tetrakis(mercaptopropionate) is used together with a bifunctional polythiol compound having thiol groups in order to increase the degree of crosslinking of the resin (see Japanese Patent Laid-Open No. 63-046213).

Furthermore, Japanese Patent Laid-Open No. 63-265922 discloses that cured products obtained by curing polymerizable compositions comprising particular polyolefin compounds and polythiol compounds have been widely used as various optical members such as lenses (see, for example, Japanese Patent Laid-Open No. 63-265922) .

The use of aromatic polyisocyanates as high refractive index monomers has been considered in order to obtain plastic lenses with a higher refractive index, but there are problems with aromatic polyisocyanates, such as their low weather resistance and their tendency to be yellowed under the influence of ultraviolet rays, oxygen, moisture, and the like. Therefore, from the viewpoint of retaining the quality of the resulting optical members, aromatic polyisocyanates have not been used for thiourethane resin-based high refractive index plastic lenses.

In recent years, it has also become increasingly common for polymerizable compositions for optical materials for lens base material applications to undergo dyeing treatment after polymerization curing and release from the mold, and accordingly, excellent dyeability is required. However, the dyeability of thiourethane resin-based high refractive index plastic lenses has not been sufficiently enhanced, and there is room for improvement.

The present invention has been made in consideration of the above problems. That is, an object of the present invention is to provide a polymerizable composition for optical materials that can achieve a cured product with a high refractive index and a small yellowness index ΔYI even though an aromatic polyisocyanate is used, a transparent resin and a method for producing the same using the polymerizable composition, a lens base material and a method for producing the same using the polymerizable composition, and the like.

In addition, another object of the present invention is to provide a polymerizable composition for optical materials that can achieve a cured product not only with a high refractive index and a small yellowness index ΔYI, but also with enhanced dyeability and the like even though an aromatic polyisocyanate is used, a transparent resin and a method for producing the same using the polymerizable composition, a lens base material and a method for producing the same using the polymerizable composition, and the like.

### SUMMARY OF THE INVENTION

As a result of diligent investigations in order to solve the above problems, the present inventors have found a polymerizable composition containing an aromatic polyisocyanate, a polyene compound, and a polythiol and having a particular resin composition, and have found that this polymerizable composition can solve the above problems, thereby leading to the completion of the present invention.
[1] A polymerizable composition for optical materials, at least comprising an aromatic polyisocyanate, a polyene compound having two or more ethylenically unsaturated double bonds, and 30 to 80% by mass of a polythiol having three or more mercapto groups; wherein the polymerizable composition has a mercapto group/(isocyanate group + ethylenically unsaturated double bond) equivalent ratio of 1.10 to 1.70.
[2] The polymerizable composition for optical materials according to [1], wherein the aromatic polyisocyanate comprises one or more selected from the group consisting of tolylene diisocyanate, diphenylmethane diisocyanate, phenylene diisocyanate, naphthalene diisocyanate, and xylylene diisocyanate.
[3] The polymerizable composition for optical materials according to [1] or [2], wherein the aromatic polyisocyanate is substantially free of phenylene diisocyanate.
[4] The polymerizable composition for optical materials according to any one of [1] to [3], wherein the polythiol comprises one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol.
[5] The polymerizable composition for optical materials according to any one of [1] to [4], wherein the polyene compound comprises one or more selected from the group consisting of triallyl isocyanurate and triallyl cyanurate.
[6] The polymerizable composition for optical materials according to any one of [1] to [5], wherein the polymerizable composition has a mercapto group/isocyanate group equivalent ratio of 0.01 to 10.00.
[7] The polymerizable composition for optical materials according to any one of [1] to [6], wherein the polymerizable composition has a mercapto group/isocyanate group equivalent ratio of 1.80 to 5.00.
[8] The polymerizable composition for optical materials according to any one of [1] to [7], wherein the polymerizable composition further comprises an aliphatic polyisocyanate.
[9] The polymerizable composition for optical materials according to [8], wherein the aliphatic polyisocyanate comprises one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.
[10] The polymerizable composition for optical materials according to [8] or [9], wherein a content proportion between the aromatic polyisocyanate and the aliphatic polyisocyanate is 1:9 to 9:1.
[11] A method for producing a transparent resin, comprising: a step of polymerizing the polymerizable composition for optical materials according to any one of [1] to [10] .
[12] A transparent resin, obtained by polymerizing the polymerizable composition for optical materials according to any one of [1] to [10].
[13] A lens base material, obtained by polymerizing the polymerizable composition for optical materials according to any one of [1] to [10].
[14] The lens base material according to [13], wherein the lens base material has a refractive index of 1.59 or more and 1.68 or less.

According to one aspect of the present disclosure, a polymerizable composition for optical materials containing an aromatic polyisocyanate, a polyene compound, and a polythiol and having a particular resin composition can be provided, and from this, a transparent resin or lens base material with a high refractive index and a small yellowness index ΔYI even though an aromatic polyisocyanate is used, a method for producing the same, and the like can be provided. In addition, according to one aspect of the present disclosure, a transparent resin or lens base material not only with a high refractive index and a small yellowness index ΔYI, but also with enhanced dyeability and the like, a method for producing the same, and the like can be provided.

### DETAILED DESCRIPTION OF THE PREFERRED EMBODIMENTS

Hereinafter, an embodiment of the present disclosure (hereinafter, referred to as a "present embodiment") will be described in detail with reference to the drawings as necessary, but the present invention is not limited thereto, and a variety of variations are possible within the range not departing from the gist thereof. Note that, in the present specification, the notation of the numerical range "1 to 100", for example, shall include both the lower limit value of "1" and the upper limit value of "100". The same also applies to the notation of other numerical ranges.

### [Polymerizable composition for optical materials]

A polymerizable composition for optical materials of the present embodiment at least contains an aromatic polyisocyanate, a polyene compound having two or more ethylenically unsaturated double bonds, and 30 to 80% by mass of a polythiol having three or more mercapto groups. The polymerizable composition for optical materials of the present embodiment uses an excess of polythiol in terms of mercapto group/(isocyanate group + ethylenically unsaturated double bond) equivalent ratio. In the present embodiment, by using an excess of polythiol in terms of mercapto group/(isocyanate group + ethylenically unsaturated double bond) equivalent ratio, unreacted thiol groups are allowed to remain in the resin (thiourethane-based resin) after curing of the polymerizable composition, thereby maintaining the yellowness index ΔYI at a comparatively low level, and at the same time, by using the aromatic polyisocyanate, which is a high refractive index monomer, a high refractive index is imparted to the resin after curing. In addition, the remaining unreacted thiol groups are also expected to improve the dyeability of the resulting cured product or the like. Note that, in the present invention and the present specification, the term "thiourethane-based resin" means a resin having thiourethane bonds. Also, some of the compounds that can be used as components of the polymerizable composition for optical materials have two or more isomers. For such compounds, a mixture of two or more isomers may be used, or one of the two or more isomers may be used alone.

### (Aromatic polyisocyanate)

The aromatic polyisocyanate is a polyfunctional isocyanate having one or more aromatic rings and two or more isocyanate groups (-NCO) in one molecule. For the aromatic polyisocyanate, any of the publicly known ones can be used without particular restrictions, as long as they can be used for fabricating transparent resins, lens base materials, and the like.

Specific examples of the aromatic polyisocyanate include, but are not particularly limited to, the following:
aromatic polyisocyanates such as 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenylisocyanate), 4,4'-methylenebis(2-methylphenylisocyanate), bibenzyl-4,4'-diisocyanate, and bis(isocyanatophenyl)ethylene;

polyisocyanates having an aromatic compound such as xylylene diisocyanate, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalin, and bis(isocyanatomethylphenyl) ether;
aromatic sulfide-based polyisocyanates such as 2-isocyanatophenyl-4-isocyanatophenyl sulfide, bis(4-isocyanatophenyl) sulfide, and bis(4-isocyanatomethylphenyl) sulfide; and
aromatic disulfide-based isocyanates such as bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methoxy-4-isocyanatophenyl) disulfide, and bis(4-methoxy-3-isocyanatophenyl) disulfide. These aromatic polyisocyanates may be used alone as one kind, or may be used in an arbitrary combination of two or more kinds.

Among aromatic polyisocyanates, from the viewpoints of heat resistance and transparency of the resulting cured product, as well as ease of availability of materials and cost, tolylene diisocyanate (TDI), diphenylmethane diisocyanate (MDI), phenylene diisocyanate (PDI), naphthalene diisocyanate (NDI), and xylylene diisocyanate (XDI) are preferable. Tolylene diisocyanate (TDI) and diphenylmethane diisocyanate (MDI) are more preferable, and tolylene diisocyanate (TDI) is still more preferable.

Here, since diphenylmethane diisocyanate (MDI) tends to have a larger absolute value of yellowness index ΔYI compared to tolylene diisocyanate (TDI), in one aspect, it is preferable that the polymerizable composition for optical materials of the present embodiment should be substantially free of diphenylmethane diisocyanate (MDI). Here, the term "substantially free of diphenylmethane diisocyanate (MDI)" means that the content proportion of diphenylmethane diisocyanate (MDI) in terms of solid content relative to the total amount of the polymerizable composition is less than 1% by mass, more preferably less than 0.1% by mass, still more preferably less than 0.01% by mass, and particularly preferably at or below the detection limit (ND or less) of the measuring instrument. Needless to say, the lower limit value of the content proportion is 0.00% by mass.

Note that, as the aromatic polyisocyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

### (Polyene compound having two or more ethylenically unsaturated double bonds)

In the present invention and the present specification, the term "polyene compound" refers to a compound having two or more ethylenically unsaturated double bonds, that is, carbon-carbon double bonds in one molecule (hereinafter, this may be simply referred to as a "polyene compound") that can be polymerized with the polythiol having three or more mercapto groups. The cured product of a polymerizable composition containing a polyene compound and a polythiol compound has bonds formed by the reaction (hereinafter, described as a "thiol-ene reaction") between the carbon-carbon double bonds that the polyene compound has and the thiol groups that the polythiol compound has. And, the cured product obtained by curing a polymerizable compound in which an aromatic polyisocyanate is further added to the polymerizable composition containing a polyene compound and a polythiol compound also has, in addition to thiourethane bonds obtained by the reaction between the aromatic polyisocyanate compound and the polythiol compound, bonds obtained by the thiol-ene reaction. For the polyene compound, any of the publicly known ones can be used without particular restrictions, as long as they can be used for fabricating transparent resins, lens base materials, and the like.

The number of ethylenically unsaturated double bonds that the polyene compound has may be two or more, preferably three or more, and can be, for example, three to five in one molecule. Examples of the ethylenically unsaturated double bonds of the polyene compound include, but are not particularly limited to, (meth)acrylic groups, vinyl groups, and allyl groups. The types of multiple ethylenically unsaturated double bonds included in the polyene compound may be the same as or different from each other.

Specific examples of the polyene compound include, but are not particularly limited to, vinyl compounds such as divinylbenzene and divinyltoluene; (meth)acrylate compounds such as ethylene glycol di(meth)acrylate, diethylene glycol di(meth)acrylate, triethylene glycol di(meth)acrylate, trimethylolpropane tri(meth)acrylate, trimethylolpropane di(meth)acrylate, pentaerythritol tri(meth)acrylate, pentaerythritol tetra(meth)acrylate, tetraethylene glycol di(meth)acrylate, and isocyanuric acid ethylene oxide-modified tri(meth)acrylate; allyl compounds such as diallyl phthalate, diallyl maleate, triallyl cyanurate, triallyl isocyanurate, triallyl trimellitate, and tetraallyloxyethane; and the like.

The polyene compound can be, for example, an aliphatic compound, an alicyclic compound, an aromatic compound, a heterocyclic compound, or the like. In one aspect, the polyene compound can be a cyclic structure-containing compound. The cyclic structure-containing compound may be a carbocyclic compound or a heterocyclic compound, and may be a monocyclic compound or a bicyclic or higher, polycyclic compound. In addition, the polyene compound may include a plurality of cyclic structures. In one aspect, the polyene compound can be a heteroalicyclic compound or a heteroaromatic compound, and specifically can be an isocyanuric ring-containing compound or a cyanuric ring-containing compound. Among the above, as the polyene compound, triallyl isocyanurate (TAIC) and triallyl cyanurate (TAC) are more preferable, and triallyl isocyanurate (TAIC) is still more preferable.

### (Polythiol having three or more mercapto groups)

The polythiol having three or more mercapto groups is a polyfunctional thiol having three or more mercapto groups (-SH) in one molecule. For the polythiol having three or more mercapto groups, any of the publicly known ones can be used without particular restrictions, as long as they can be used for fabricating transparent resins, lens base materials, and the like.

Specific examples of the polythiol having three or more mercapto groups include the following:
aliphatic polythiols such as 1,2,3-propanetrithiol, tetrakis(mercaptomethyl)methane, 2,3-dimercaptosuccinic acid (2-mercaptoethyl ester), 2,3-dimercapto-1-propanol (2-mercaptoacetate), 2,3-dimercapto-1-propanol (3-mercaptoacetate), 2,2-bis(mercaptomethyl)-1,3-propanedithiol, trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), and 1,2-bis(2-mercaptoethylthio)-3-mercaptopropane;
aromatic polythiols such as 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, and 1,2,4,5-tetrakis(mercaptoethoxy)benzene;
aromatic polythiols containing a sulfur atom other than thiol groups (which may also be referred to as "mercapto groups"), such as 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, and 1,2,4,5-tetrakis(mercaptoethylthio)benzene, and nucleus alkylated products thereof; and
aliphatic polythiols containing a sulfur atom other than thiol groups, such as 1,2,3-tris(mercaptomethylthio)propane, 1,2,3-tris(2-mercaptoethylthio)propane, 1,2,3-tris(3-mercaptopropylthio) propane, tetrakis(mercaptomethylthiomethyl)methane, tetrakis(2-mercaptoethylthiomethyl)methane, tetrakis(3-mercaptopropylthiomethyl)methane, and bis(2,3-dimercaptopropyl) sulfide, and thioglycolic acid and mercaptopropionic acid esters thereof, thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(1,3-dimercapto-2-propyl) sulfide, and bis(mercaptomethyl)-3,6,9-trithiaundecane-1,11-dithiol (which may also be referred to as "bis(mercaptomethyl)-3,6,9-trithia-1,11-undecanedithiol"; one isomer selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, or a mixture of two or three of these isomers). These polythiols may be used alone as one kind, or may be used in an arbitrary combination of two or more kinds.

In one aspect, the polythiol having three or more mercapto groups can be an aliphatic compound. Also, in one aspect, the above polythiol can be an ester bond-containing compound. For example, the ester bond-containing polythiol can include two or more, for example, two to five ester bonds in one molecule. In one aspect, the above polythiol can be an ester bond-containing aliphatic compound. Among polythiols having three or more mercapto groups, from the viewpoint of increasing the mercapto group/(isocyanate group + ethylenically unsaturated double bond) equivalent ratio, polythiols having three mercapto groups in one molecule, polythiols having four mercapto groups in one molecule, and polythiols having five mercapto groups in one molecule are preferable. In addition, specifically, the polythiol having three or more mercapto groups is preferably pentaerythritol tetrakis(2-mercaptoacetate) (PETMA), pentaerythritol tetrakis(3-mercaptopropionate) (PETMP), 4-mercaptomethyl-3,6-dithiaoctane-1,8-dithiol, and bis(mercaptomethyl)-3,6,9-trithiaundecane-1,11-dithiol, and more preferably pentaerythritol tetrakis(2-mercaptoacetate) (PETMA), 4-mercaptomethyl-3,6-dithiaoctane-1,8-dithiol, and bis(mercaptomethyl)-3,6,9-trithiaundecane-1,11-dithiol.

### (Additional polyiso(thio)cyanate)

The polymerizable composition for optical materials of the present embodiment may contain only the above aromatic polyisocyanate as the polyisocyanate component, but may further contain a polyiso(thio)cyanate other than the above-mentioned aromatic polyisocyanate (hereinafter, this may be simply referred to as an "additional polyiso(thio)cyanate") to the extent that the effects of the present invention are not impaired.

In the present invention and the present specification, the term "polyiso(thio)cyanate" refers to a compound having two or more iso(thio)cyanate groups in one molecule. The term "iso(thio)cyanate" means isocyanate and/or isothiocyanate. Isocyanate may also be referred to as isocyanato, and isothiocyanate may also be referred to as isothiocyanato. The cured product of a polymerizable composition for optical materials containing a polyiso(thio)cyanate and a polythiol having three or more mercapto groups can have thiourethane bonds formed by the reaction (thiourethanization reaction) between the iso(thio)cyanate groups that the polyiso(thio)cyanate has and the thiol groups that the polythiol has.

The additional polyiso(thio)cyanate can be a linear or branched, or alicyclic aliphatic polyiso(thio)cyanate, a heterocyclic polyiso(thio)cyanate, or the like. The number of iso(thio)cyanate groups that the additional polyiso(thio)cyanate has is two or more, preferably two to four, and more preferably two or three in one molecule.

Specific examples of the additional polyiso(thio)cyanate include, but are not particularly limited to, linear or branched aliphatic polyisocyanates such as hexamethylene diisocyanate, 1,5-pentane diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate; aliphatic polyisothiocyanates such as 1,2-diisothiocyanatoethane and 1,6- diisothiocyanatohexane; alicyclic polyisocyanates such as bis(4-isocyanatocyclohexyl)methane, 1,3-bis(isocyanatomethyl)cyclohexane, 1,4-bis(isocyanatomethyl)cyclohexane, diisocyanatocyclohexane, isophorone diisocyanate, bis(isocyanatomethyl)cyclohexane, dicyclohexylmethane diisocyanate, 2,5-bis(isocyanatomethyl)-bicyclo[2.2.1]heptane, and 2,6-bis(isocyanatomethyl)-bicyclo[2.2.1]heptane; and the like. These additional polyiso(thio)cyanates may be used alone as one kind, or may be used in an arbitrary combination of two or more kinds.

Moreover, as the additional polyiso(thio)cyanate, the following can also be used: sulfur-containing aliphatic polyisocyanates such as bis(isocyanatomethyl) sulfide, bis(isocyanatoethyl) sulfide, bis(isocyanatopropyl) sulfide, bis(isocyanatohexyl) sulfide, bis(isocyanatomethyl)sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptanetetraisocyanate, 2,6-diisocyanatomethyl-3,5-dithia-1,7-heptane diisocyanate, 2,5-diisocyanatomethylthiophene, and 4-isocyanatoethylthio-2,6-dithia-1,8-octane diisocyanate; alicyclic polyisothiocyanates such as cyclohexane diisothiocyanate; sulfur-containing aliphatic iso(thio)cyanates such as thiobis(3-isothiocyanatopropane), thiobis(2-isothiocyanatoethane), and dithiobis(2-isothiocyanatoethane); sulfur-containing alicyclic polyisocyanates such as isocyanatomethyl-2-methyl-1,3-dithiolane; sulfur-containing alicyclic compounds such as 2,5-diisothiocyanatothiophene, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane; compounds having an isocyanato group and an isothiocyanato group such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanatol,3,5-triazine, 4-isocyanatophenyl-4-isothiocyanatophenyl sulfide, and 2-isocyanatoethyl-2-isothiocyanatoethyl disulfide; and the like. These additional polyiso(thio)cyanates may be used alone as one kind, or may be used in an arbitrary combination of two or more kinds.

Among these additional polyiso(thio)cyanates, aliphatic polyisocyanates are preferable. Dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate are preferable, and dicyclohexylmethane diisocyanate, bis(isocyanatomethyl)cyclohexane, and hexamethylene diisocyanate are more preferable.

Note that, as the above-mentioned additional polyiso(thio)cyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

Suitable examples of the combination of the aromatic polyisocyanate, the polyene compound having two or more ethylenically unsaturated double bonds in one molecule, and the polythiol having three or more mercapto groups include:
(1) a combination of tolylene diisocyanate, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol;
(2) a combination of diphenylmethane diisocyanate, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol;
(3) a combination of tolylene diisocyanate, one or more aliphatic polyisocyanates, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol; and
(4) a combination of diphenylmethane diisocyanate, one or more aliphatic polyisocyanates, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol.

The amount of aromatic polyisocyanate to be used can be set as appropriate depending on the desired performance and is not particularly limited, but it is preferably 1 to 50% by mass in total, more preferably 3 to 45% by mass in total, and still more preferably 5 to 40% by mass in total, relative to the total solid content of the polymerizable composition for optical materials. Note that, in the case where no polyiso(thio)cyanate such as aliphatic polyisocyanates is used in combination, the amount of aromatic polyisocyanate to be used is preferably 10 to 40% by mass in total, more preferably 10 to 35% by mass in total, and still more preferably 15 to 30% by mass in total, relative to the total solid content of the polymerizable composition for optical materials.

Alternatively, in the case where one or more aliphatic polyisocyanates are used in combination, the amount of aromatic polyisocyanate and aliphatic polyisocyanates to be used can be set as appropriate depending on the desired performance and is not particularly limited, but it is preferably 10 to 40% by mass in total, more preferably 10 to 35% by mass in total, and still more preferably 15 to 30% by mass in total, relative to the total solid content of the polymerizable composition for optical materials. At this time, although the proportion between aromatic polyisocyanate and aliphatic polyisocyanate to be used is not particularly limited, it is preferably 1:9 to 9:1, more preferably 2:8 to 8:2, and still more preferably 3:7 to 7:3.

Furthermore, the amount of polyene compound having two or more ethylenically unsaturated double bonds to be used can be set as appropriate depending on the desired performance and is not particularly limited, but it is preferably 3 to 40% by mass in total, more preferably 5 to 35% by mass in total, and still more preferably 10 to 30% by mass in total, relative to the total solid content of the polymerizable composition for optical materials.

Meanwhile, the amount of polythiol having three or more mercapto groups to be used can be set as appropriate depending on the desired performance and is not particularly limited, but it is preferably 30 to 80% by mass in total, more preferably 35 to 75% by mass in total, and still more preferably 40 to 70% by mass in total, relative to the total solid content of the polymerizable composition for optical materials.

Here, the polymerizable composition for optical materials of the present embodiment contains mercapto groups, isocyanate groups, and ethylenically unsaturated double bonds derived from the aromatic polyisocyanate, the polythiol having three or more mercapto groups, and furthermore, an optional component such as polyiso(thio)cyanate. At this time, the mercapto group/(isocyanate group + ethylenically unsaturated double bond) equivalent ratio of the polymerizable composition for optical materials of the present embodiment is preferably 1.10 to 1.70, more preferably 1.10 to 1.60, still more preferably 1.15 to 1.50, and particularly preferably 1.15 to 1.40. By setting the mercapto group/(isocyanate group + ethylenically unsaturated double bond) equivalent ratio within the above preferred numerical range and allowing unreacted thiol groups to remain in the resin (thiourethane-based resin) after curing of the polymerizable composition, the yellowness index ΔYI can be maintained at a comparatively low level, and by using the aromatic polyisocyanate, which is a high refractive index monomer, a high refractive index can be imparted to the resin after curing. In addition, the remaining unreacted thiol groups can improve the dyeability.

Note that, the -SH/ethylenically unsaturated double bond of the polymerizable composition for optical materials of the present embodiment may be set as appropriate depending on the desired performance in consideration of the types and compounding proportion of the aromatic polyisocyanate, polythiol, and polyiso(thio)cyanate to be used, and is not particularly limited. However, it is preferably 0.01 to 10.00, more preferably 0.50 to 5.00, still more preferably 1.00 to 3.50, and particularly preferably 1.20 to 3.00.

Also, the -SH/-NCO equivalent ratio of the polymerizable composition for optical materials of the present embodiment may be set as appropriate depending on the desired performance in consideration of the types and compounding proportion of the aromatic polyisocyanate, polythiol, and polyiso(thio)cyanate to be used, and is not particularly limited. However, it is preferably 0.01 to 10.00, more preferably 0.50 to 3.50, still more preferably 1.00 to 3.50, and particularly preferably 1.20 to 3.00. As one aspect, in the case of lowering the proportion of polyene compound having two or more ethylenically unsaturated double bonds to be used, the - SH/-NCO equivalent ratio may be 1.80 to 5.00, it may be 1.90 to 4.00, or it may be 2.00 to 4.00.

### (Other components)

In addition to the above-mentioned essential components, the aromatic polyisocyanate, the polyene compound having two or more ethylenically unsaturated double bonds, and the polythiol having three or more mercapto groups, and furthermore, an optional component, polyiso(thio)cyanate, the polymerizable composition for optical materials of the present embodiment may contain various additive agents publicly known in the art as necessary. Examples of the additive agents include, but are not particularly limited to, ultraviolet absorbers, polymerization catalysts, mold release agents, antioxidants, coloration inhibitors, fluorescent brightening agents, bluing agents, chain extenders, crosslinking agents, photostabilizers, oil-soluble dyes, and fillers. By mixing the above additive agents by normal methods, the desired curable composition can be obtained. In addition, organophosphorus compounds, such as phosphine derivatives, can also be used as the additive agents. The amount of additive agents to be used can be set as appropriate.

### (Ultraviolet absorber)

The ultraviolet absorber preferably has a maximum absorption wavelength of 345 nm or more in the chloroform solution. As for the ultraviolet absorber, those publicly known in the art can be used, and their types are not particularly limited. Specific examples thereof include, but are not particularly limited to, benzophenone-based compounds such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone; benzotriazole-based compounds such as 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole; dibenzoylmethane, 4-tert-butyl-4'-methoxybenzoylmethane, and the like. These ultraviolet absorbers may be used alone as one kind, or may be used in an arbitrary combination of two or more kinds.

The amount of ultraviolet absorber to be added is preferably 0.01 parts by mass or more and 5 parts by mass or less, more preferably 0.05 parts by mass or more and 3 parts by mass or less, still more preferably 0.1 parts by mass or more and 2 parts by mass or less, particularly preferably 0.3 parts by mass or more and 2 parts by mass or less, even further preferably 0.5 parts by mass or more and 2 parts by mass or less, and most preferably 0.8 parts by mass or more and 2 parts by mass or less relative to 100 parts by mass of the total amount of resin components (that is, the aromatic polyisocyanate, the polyene compound having two or more ethylenically unsaturated double bonds, and the polythiol having three or more mercapto groups, and furthermore, an optional component, polyiso(thio)cyanate). Note that, in the present invention and the present specification, the mass of resin components refers to, when the polymerizable composition for optical materials contains a solvent, the mass of the polymerizable composition excluding that of the solvent.

### (Polymerization catalyst)

The polymerization catalyst may comprise a first polymerization catalyst that catalyzes the thiol-ene reaction between the polyene compound having two or more ethylenically unsaturated double bonds and the polythiol having three or more mercapto groups, and a second polymerization catalyst that catalyzes the thiourethanization reaction of the polythiol having three or more mercapto groups, the aromatic polyisocyanate, and furthermore, an optional component, polyiso(thio)cyanate. As for the first polymerization catalyst that catalyzes the thiol-ene reaction and the second polymerization catalyst that catalyzes the thiourethanization reaction, those publicly known in the art can be used, and their types are not particularly limited.

Examples of the first polymerization catalyst that catalyzes the thiol-ene reaction include, but are not particularly limited to, azobis-based compounds such as 2,2'-azobisisobutyronitrile, 2,2'-azobis(2-methylbutyronitrile), 2,2'-azobis-2,4-dimethylvaleronitrile, dimethyl-2,2'-azobisisobutyrate, 1,1'-azobis(cyclohexane-1-carbonitrile), 1,1'-azobis(1-acetoxy-1-phenylethane), and 2,2'-azobis(4-methoxy-2,4-dimethylvaleronitrile); peroxide-based compounds such as benzoyl peroxide, acetyl peroxide, tert-butyl peroxide, propionyl peroxide, lauroyl peroxide, tert-butyl peroxyacetate, tert-butyl peroxybenzoate, tert-butyl hydroperoxide, tert-butyl peroxypivalate, 1,1-bis(t-butylperoxy)-3,3,5-trimethylcyclohexane, t-butyl peroxy-2-ethylhexanoate, t-amyl peroxy-2-ethylhexanoate, t-amyl perisononanoate, t-amyl peroxyacetate, and t-amyl peroxybenzoate; and the like.

Examples of the second polymerization catalyst that catalyzes the thiourethanization reaction preferably include organotin compounds. Specific examples thereof include, but are not particularly limited to, alkyltin halide compounds such as dibutyltin dichloride, dimethyltin dichloride, monomethyltin trichloride, trimethyltin chloride, tributyltin chloride, tributyltin fluoride, and dimethyltin dibromide; and alkyltin compounds such as dibutyltin diacetate and dibutyltin dilaurate. These polymerization catalysts may be used alone as one kind, or may be used in an arbitrary combination of two or more kinds. Among the above, dibutyltin dichloride, dimethyltin dichloride, dibutyltin diacetate, and dibutyltin dilaurate are preferable.

The amount of first polymerization catalyst that catalyzes the thiol-ene reaction to be added is preferably 0.001 parts by mass or more and 0.10 parts by mass or less, more preferably 0.005 parts by mass or more and 0.08 parts by mass or less, and still more preferably 0.010 parts by mass or more and 0.06 parts by mass or less relative to 100 parts by mass of the total amount of resin components (that is, the aromatic polyisocyanate, the polyene compound having two or more ethylenically unsaturated double bonds, and the polythiol having three or more mercapto groups, and furthermore, an optional component, polyiso(thio)cyanate).

The amount of second polymerization catalyst that catalyzes the thiourethanization reaction to be added is preferably 0.001 parts by mass or more and 1 part by mass or less, more preferably 0.005 parts by mass or more and 0.5 parts by mass or less, and still more preferably 0.005 parts by mass or more and 0.1 parts by mass or less relative to 100 parts by mass of the total amount of resin components (that is, the aromatic polyisocyanate, the polyene compound having two or more ethylenically unsaturated double bonds, and the polythiol having three or more mercapto groups, and furthermore, an optional component, polyiso(thio)cyanate).

### (Mold release agent)

The mold release agent enhances the releasing properties from the molding mold. As for the mold release agent, those publicly known in the art can be used, and their types are not particularly limited. The mold release agent is preferably a phosphoric acid ester compound. Specific examples thereof include, but are not particularly limited to, isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propylphenyl acid phosphate, butylphenyl acid phosphate, and butoxyethyl acid phosphate. The phosphoric acid ester compound may be either phosphoric acid monoester compound or phosphoric acid diester compound, but a mixture of phosphoric acid monoester compound and phosphoric acid diester compound is preferable.

The amount of mold release agent to be added is preferably 0.01 parts by mass or more and 1.00 parts by mass or less, and more preferably 0.05 parts by mass or more and 0.50 parts by mass or less relative to 100 parts by mass of the total amount of resin components (that is, the aromatic polyisocyanate, the polyene compound having two or more ethylenically unsaturated double bonds, and the polythiol having three or more mercapto groups, and furthermore, an optional component, polyiso(thio)cyanate).

The polymerizable composition for optical materials of the present embodiment can be prepared by sequentially mixing the polythiol having three or more mercapto groups, the polyene compound having two or more ethylenically unsaturated double bonds, the aromatic polyisocyanate, and as necessary, optional components, polyiso(thio)cyanate and various additive agents simultaneously or in an arbitrary order. The method for preparing the polymerizable composition for optical materials is not particularly limited, and any method publicly known as a method for preparing a polymerizable composition can be employed as appropriate. Also, the polymerizable composition for optical materials of the present embodiment may be prepared without adding any solvent, or may be prepared by adding an arbitrary amount of solvent. As the solvent, one or more of the solvents publicly known as solvents that can be used for polymerizable compositions can be used.

### [Transparent resin]

A transparent resin of the present embodiment can be obtained by polymerizing the above-mentioned polymerizable composition for optical materials. In the transparent resin of the present embodiment, as mentioned above, an excess of polythiol in terms of mercapto group/(isocyanate group + ethylenically unsaturated double bond) equivalent ratio is used and unreacted thiol groups are thus allowed to remain, thereby maintaining the yellowness index ΔYI at a comparatively low level. At the same time, by using the aromatic polyisocyanate, which is a high refractive index monomer, a high refractive index is achieved in the resin after curing. In addition, since unreacted thiol groups remain in the transparent resin of the present embodiment, dyeability and the like are also improved.

The method for producing the transparent resin of the present embodiment is not particularly limited, and any method publicly known as a method for producing a transparent resin can be employed as appropriate. In one aspect, the method for producing the transparent resin of the present embodiment comprises a step of polymerizing the above-mentioned polymerizable composition for optical materials.

In the transparent resin obtained after the polymerization step, while the refractive index is comparatively high, the yellowness index ΔYI is comparatively small and the dyeability and the like are also improved. In addition, compared to inorganic lenses, it is lighter and less fragile, and it is easier to obtain ones having even better heat resistance, durability, and impact resistance. For this reason, the transparent resin of the present embodiment can be suitably used as various optical members. Examples of the optical members may include various lenses and optical elements such as spectacle lenses, telescope lenses, binocular lenses, microscope lenses, endoscope lenses, and imaging system lenses of various cameras, and more preferably, examples thereof include spectacle lenses. Note that the term "lens" in the present invention and the present specification shall include "lens base materials" in which one or more layers are laminated in an arbitrary manner. And, the term "for optical materials" in the present invention and the present specification is meant to include these optical members.

For example, in order to produce a cured product with a lens shape (also referred to as a "lens base material" or "plastic lens"), cast polymerization is preferable. In the cast polymerization, for example, the polymerizable composition for optical materials prepared as described above is injected into a cavity of a molding mold having two molds facing each other with a certain interval and a cavity formed by closing the above interval, from an inlet provided on the side of the molding mold after defoaming as necessary. By polymerizing the polymerizable composition for optical materials in this cavity, preferably by heating (curing reaction), a cured product can be obtained to which the internal shape of the cavity is transferred. For the molding mold, for example, a molding mold made of glass or metal is used. The polymerization conditions upon polymerizing the polymerizable composition for optical materials in the molding mold are not particularly limited, and can be set as appropriate depending on the composition and the like of the polymerizable composition for optical materials to be used. As one example, a molding mold in which the polymerizable composition for optical materials has been injected into the cavity can be subjected to heat treatment under conditions of preferably 0°C or higher and 150°C or lower, more preferably 10°C or higher and 130°C or lower, and for preferably 3 hours or longer and 50 hours or shorter, more preferably 5 hours or longer and 25 hours or shorter. However, the conditions are not limited to the above. Note that, in the present invention and the present specification, the temperature regarding cast polymerization, such as heating temperature, refers to the ambient temperature at which the molding mold is placed. Also, during heating, the temperature can be raised at an arbitrary temperature raising rate and can be lowered (cooled) at an arbitrary temperature lowering rate. After the polymerization (curing reaction) ends, the cured product inside the cavity is released from the molding mold. In order to make the transparent resin fabricated by polymerizing the polymerizable composition for optical materials have good release properties from the molding mold, a mold release agent may be applied to the mold release surface of the molding mold, or a mold release agent may be added to the polymerizable composition for optical materials.

The cured product that has been released from the molding mold can be used as an optical member after carrying out post treatment as necessary, and for example, it can be used as various lenses (for example, lens base materials). As one example, the cured product used as the lens base material for spectacle lenses can be normally subjected to, after being released from the mold, post processing such as annealing, dyeing treatment, grinding such as rounding, polishing, and processing for forming a coat layer such as a primer coat layer to improve impact resistance and a hard coat layer to increase surface hardness. Furthermore, various functional layers such as antireflection layers and water repellent layers can be formed on the lens base material. For any of these processing steps, publicly known technologies can be applied. For example, in the dyeing treatment, the lens base material can be dyed with any color such as blue, red, green, or yellow. The transparent resin (for example, lens base material) of the present embodiment has a high visual transmittance and exhibits excellent color development properties even when dyed with these colors. In this way, a spectacle lens in which the lens base material is the above cured product can be obtained. Furthermore, by attaching this spectacle lens to a frame, glasses can be obtained.

According to the present embodiment, since an aromatic polyisocyanate as a high refractive index monomer, a polyene compound having two or more ethylenically unsaturated double bonds, and a polythiol having three or more mercapto groups are used and an excess of polythiol in terms of mercapto group/(isocyanate group + ethylenically unsaturated double bond) equivalent ratio is used, it is possible to obtain a transparent resin having a comparatively small yellowness index ΔYI while having a high refractive index.

### Examples

Hereinafter, the present embodiment will be described more specifically with reference to Examples and Comparative Examples, but the present invention is not restricted in any way to these Examples. The present invention can adopt a variety of conditions as long as they do not depart from the gist of the present invention and achieve the objects of the present invention. Note that the values of the various production conditions and evaluation results shown below have the meaning as the preferred upper limit value or preferred lower limit value in the implementation of the present invention, and the preferred range may be the range specified by the combination of the aforementioned upper limit or lower limit values and the values of the following Examples or the combination of the values among Examples. In addition, the operations and evaluations described below were performed under room temperature (about 20 to 25°C) in the atmosphere, unless otherwise noted. Also, % and part(s) described below are on the basis of mass unless otherwise noted.

### [Measurement methods and evaluation criteria]

The measurement conditions and evaluation criteria for the refractive index, transparency, yellowness index YI, yellowness index ΔYI, and dyeability in the plastic lenses of Examples and Comparative Examples are as follows.

### <Refractive index>

The refractive indices of the plastic lenses were measured at 20°C using a KPR-2000 type precision refractometer manufactured by Kalnew Optical Industrial Co., Ltd. for light at the wavelength of the D line (689.6 nm). In one aspect, the refractive index is preferably 1.59 or more and 1.61 or less. Also, in another aspect, the refractive index is preferably 1.62 or more and 1.68 or less, and more preferably 1.65 or more and 1.68 or less.

### <Transparency>

By visually observing the obtained plastic lenses in the dark under fluorescent light, the transparency of the plastic lenses was evaluated using the following three levels. Note that plastic lenses with an evaluation result of VG or G have no practical problem in terms of transparency. On the other hand, plastic lenses with an evaluation result of B are not appropriate for practical use.

VG (Very Good): No cloudiness or opaque material deposition.

G (Good): Slight cloudiness and/or deposition of opaque material observed.

B (Bad): Severe degree of cloudiness or obvious deposition of opaque material.

### <Yellowness index YI and yellowness index ΔYI>

The yellowness index (YI) was measured in accordance with JIS K 7373:2006, using a spectrophotometer U-4100 manufactured by Hitachi, Ltd. as the measuring apparatus. The yellowness index YI is a numerical value indicating the strength of yellowness, and it means that the larger the YI value, the stronger the yellowness. Here, the measurement of yellowness index YI was performed before and after the 3-day accelerated weathering test QUV (0.77 mW/cm², 45°C and 95% RH, 4-hour cycle switching with 45°C), and the change in YI value of the plastic lenses before and after the test was calculated as the yellowness index ΔYI. It can be said that the smaller the yellowness index ΔYI, the less yellowing there is. In one aspect, when the refractive index is 1.59 or more and 1.61 or less, a yellowness index ΔYI of 1.0 or less is preferable for spectacle lenses. Also, in another aspect, when the refractive index is 1.62 or more and 1.68 or less, a yellowness index ΔYI of 5.0 or less is preferable for spectacle lenses. Note that the lower limit of yellowness index ΔYI can be, for example, 0.3 or more, but it may be less than 0.3 because the lower the value, the more preferable it is.

### <Glass transition temperature Tg>

The glass transition temperature Tg in the present invention and the present specification refers to the glass transition temperature measured by the thermomechanical analysis (TMA) penetration method in accordance with JIS K7196-2012. The measurement of the glass transition temperature was carried out on the obtained plastic lenses by the penetration method using a thermomechanical analyzing apparatus TMA8310 manufactured by Rigaku Corporation. The temperature raising rate during the measurement was set at 10 K/min, and an indenter with a diameter of 0.5 mm was used as the indenter for the penetration method. In one aspect, the glass transition temperature can be at 70°C or higher or 80°C or higher, for example. A high glass transition temperature is preferable from the viewpoint of heat resistance.

### <Dyeability>

The obtained plastic lenses were immersed in a dyeing solution at 81°C and dyed. For the dyeing solution, 1000 parts by mass of pure water were taken in a container, and 2.0 parts by mass of brown dye and 1.0 parts by mass of NICCA SUNSOLT #7000 were added for use. Then, for the normal incident transmission spectral characteristics of the plastic lenses before and after dyeing, the transmittance at a wavelength of 550 nm was measured by incident light from the object side surface side (convex side) of the plastic lens to the optical center of the object side surface using a spectacle lens color tester MODEL-321S manufactured by Asahi Spectra Co., Ltd. Using the measurement results, the transmittance of the plastic lenses before and after dyeing was determined respectively, and the difference in transmittance before and after dyeing was calculated and evaluated according to the following criteria.

○: The difference in transmittance (%) before and after dyeing is 15 or more

× : The difference in transmittance (%) before and after dyeing is less than 15

### (Example 1)

To a 300 ml eggplant-shaped flask, 19.3 g of tolylene diisocyanate (TDI) as the aromatic polyisocyanate, 19.3 g of triallyl isocyanurate (TAIC) as the polyene compound, 1.00 g of 2-(2-hydroxy-4-octyloxyphenyl)-2-H-benzotriazole as the UV absorber, and 0.15 g of butoxyethyl acid phosphate as the internal mold release agent were added and mixed. After they were completely dissolved, 61.4 g of pentaerythritol tetrakis(2-mercaptoacetate) (PETMA) as the polythiol, and 0.015 g of dimethyltin dichloride and 0.08 g of 2,2'-azobis-2,4-dimethylvaleronitrile as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a colorless and transparent polymerizable composition for optical materials of Example 1. The mercapto group/(isocyanate group + ethylenically unsaturated double bond) equivalent ratio is 1.25.

This polymerizable composition for optical materials of Example 1 was injected into a lens mold through a 1.0 µm polytetrafluoroethylene membrane filter, and cast polymerization was carried out for 24 hours in a temperature program from an initial temperature of 25°C to a final temperature of 120°C, thereby fabricating a transparent resin (plastic lens) of Example 1 that was colorless and transparent with a central wall thickness of 1.8 mm. After the obtained plastic lens of Example 1 was released from the molding mold, various measurements and evaluations were carried out. The results are shown in Table 1.

### (Example 2 and Comparative Example 1)

Polymerizable compositions for optical materials of Example 2 and Comparative Example 1 were prepared in the same manner as in Example 1, except that the compounding proportion of each component was changed as described in Table 1, and plastic lenses of Example 2 and Comparative Example 1 were fabricated. Also, various measurements and evaluations were carried out in the same manner as in Example 1. The results are shown in Table 1.

### [Table 1]

**Table 1**

| | Aromatic polyisocyanate | Polyene compound | Polythiol having three or more mercapto groups | -SH/(-NCO + ethylenically unsaturated double bond) equivalent ratio | -SH/ethylenically unsaturated double bond equivalent ratio | -SH/-NCO equivalent ratio | Transparency | Refractive index (n) | Yellowness index (ΔYI) | Tg (°C) | Dyeability |
|---|---|---|---|---|---|---|---|---|---|---|---|
| Example 1 | TDI | TAIC | PETMA | 1.25 | 2.45 | 2.55 | VG | 1.603 | 0.4 | 82 | ○ |
| | 19.3 | 19.3 | 61.4 | | | | | | | | |
| Example 2 | TDI | TAIC | PETMA | 1.15 | 2.25 | 2.35 | VG | 1.603 | 0.8 | 94 | ○ |
| | 20.3 | 20.3 | 59.4 | | | | | | | | |
| Comparative Example 1 | TDI | TAIC | PETMA | 1.00 | 1.95 | 2.05 | VG | 1.602 | 1.5 | 105 | ○ |
| | 22.0 | 22.0 | 56.0 | | | | | | | | |

From the comparison with the plastic lens of Comparative Example 1, it was confirmed that the plastic lenses of Examples 1 to 2 maintain the same level of optical characteristics such as transparency, as well as heat resistance, and also have a small yellowness index ΔYI and excellent dyeability while having a high refractive index.

### (Example 3)

To a 300 ml eggplant-shaped flask, 26.2 g of tolylene diisocyanate (TDI) as the aromatic polyisocyanate, 18.5 g of triallyl isocyanurate (TAIC) as the polyene compound, 1.00 g of 2-(2-hydroxy-4-octyloxyphenyl)-2-H-benzotriazole as the UV absorber, and 0.15 g of butoxyethyl acid phosphate as the internal mold release agent were added and mixed. After they were completely dissolved, 55.3 g of bis(mercaptomethyl)-3,6,9-trithiaundecane-1,11-dithiol as the polythiol, and 0.015 g of dimethyltin dichloride and 0.08 g of 2,2'-azobis-2,4-dimethylvaleronitrile as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a colorless and transparent polymerizable composition for optical materials of Example 3. The mercapto group/(isocyanate group + ethylenically unsaturated double bond) equivalent ratio is 1.15.

This polymerizable composition for optical materials of Example 3 was injected into a lens mold through a 1.0 µm polytetrafluoroethylene membrane filter, and cast polymerization was carried out for 24 hours in a temperature program from an initial temperature of 25°C to a final temperature of 120°C, thereby fabricating a transparent resin (plastic lens) of Example 3 that was colorless and transparent with a central wall thickness of 1.8 mm. After the obtained plastic lens of Example 3 was released from the molding mold, various measurements and evaluations were carried out. The results are shown in Table 2.

### (Comparative Example 2)

A polymerizable composition for optical materials of Comparative Example 2 was prepared in the same manner as in Example 3, except that the compounding proportion of each component was changed as described in Table 2, and a plastic lens of Comparative Example 2 was fabricated. Also, various measurements and evaluations were carried out in the same manner. The results are shown in Table 2.

### [Table 2]

**Table 2**

| | Aromatic polyisocyanate | Polyene compound | Polythiol having three or more mercapto groups | -SH/-NCO equivalent ratio | -SH/ethylenically unsaturated double bond equivalent ratio | -SH/- NCO equivalent ratio | Transparency | Refractive index (n) | Yellowness index (ΔYI) | Tg (°C) | Dyeability |
|---|---|---|---|---|---|---|---|---|---|---|---|
| Example 3 | TDI | TAIC | Compound 1 | 1.15 | 2.71 | 2.00 | VG | 1.667 | 4.2 | 89 | ○ |
| | 26.2 | 18.5 | 55.3 | | | | | | | | |
| Comparative Example 2 | TDI | TAIC | Compound 1 | 1.00 | 2.35 | 1.74 | VG | 1.666 | 8.9 | 102 | × |
| | 28.2 | 20.0 | 51.8 | | | | | | | | |

| | | | | | | | | | | | |
|---|---|---|---|---|---|---|---|---|---|---|---|
| Compound 1: bis(mercaptomethyl)-3,6,9-trithiaundecane-1,11-dithiol | | | | | | | | | | | |

From the comparison with the plastic lens of Comparative Example 2, it was confirmed that the plastic lens of Example 3 maintains the same level of optical characteristics such as transparency, as well as heat resistance, and also has a small yellowness index ΔYI and excellent dyeability while having a high refractive index.

In conclusion, each of the aforementioned aspects will be summarized.

According to one aspect, provided is a polymerizable composition for optical materials, at least containing an aromatic polyisocyanate, a polyene compound having two or more ethylenically unsaturated double bonds, and 30 to 80% by mass of a polythiol having three or more mercapto groups; wherein the polymerizable composition has a mercapto group/(isocyanate group + ethylenically unsaturated double bond) equivalent ratio of 1.10 to 1.70.

According to the above polymerizable composition for optical materials, a transparent resin or lens base material with a high refractive index and a small yellowness index ΔYI even though an aromatic polyisocyanate is used, a method for producing the same, and the like can be provided. In addition, according to one aspect, a transparent resin or lens base material not only with a high refractive index and a small yellowness index ΔYI, but also with enhanced dyeability and the like, a method for producing the same, and the like can be provided.

In one aspect, the above aromatic polyisocyanate can be one or more selected from the group consisting of tolylene diisocyanate, diphenylmethane diisocyanate, phenylene diisocyanate, naphthalene diisocyanate, and xylylene diisocyanate.

In one aspect, the above aromatic polyisocyanate can be substantially free of phenylene diisocyanate.

In one aspect, the above polythiol can be one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol.

In one aspect, the above polyene compound can be one or more selected from the group consisting of triallyl isocyanurate and triallyl cyanurate.

In one aspect, the polymerizable composition can have a mercapto group/isocyanate group equivalent ratio of 0.01 to 10.00. Alternatively, in one aspect, the polymerizable composition can have a mercapto group/isocyanate group equivalent ratio of 1.80 to 5.00.

In one aspect, the above polymerizable composition for optical materials can further comprise an aliphatic polyisocyanate.

In one aspect, the above aliphatic polyisocyanate can be one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.

In one aspect, the content proportion between the above aromatic polyisocyanate and the aliphatic polyisocyanate can be 1:9 to 9:1.

In one aspect, provided is a method for producing a transparent resin, comprising a step of polymerizing the above polymerizable composition for optical materials.

In one aspect, provided is a transparent resin obtained by polymerizing the above polymerizable composition for optical materials.

In one aspect, provided is a lens base material obtained by polymerizing the above polymerizable composition for optical materials.

In one aspect, the above lens base material can have a refractive index of 1.59 or more and 1.68 or less.

In one aspect, the above optical members or optical materials can be lenses.

In one aspect, the above lenses can be spectacle lenses or lens base materials.

The embodiments disclosed here should be considered merely illustrative and not restrictive in all respects. The scope of the present invention is presented by the claims rather than the description given above, and it is intended that all modifications within the meaning and scope equivalent to the claims be included. For example, two or more of the various aspects described in the present specification can be combined in an arbitrary combination.

One aspect of the present invention is useful in the field of production of various optical members such as spectacle lenses and lens base materials.

## Claims

1. A polymerizable composition for optical materials, at least comprising an aromatic polyisocyanate, a polyene compound having two or more ethylenically unsaturated double bonds, and 30 to 80% by mass of a polythiol having three or more mercapto groups; wherein
the polymerizable composition has a mercapto group/(isocyanate group + ethylenically unsaturated double bond) equivalent ratio of 1.10 to 1.70.

2. The polymerizable composition for optical materials according to claim 1, wherein
the aromatic polyisocyanate comprises one or more selected from the group consisting of tolylene diisocyanate, diphenylmethane diisocyanate, phenylene diisocyanate, naphthalene diisocyanate, and xylylene diisocyanate.

3. The polymerizable composition for optical materials according to claim 1 or 2, wherein
the aromatic polyisocyanate is substantially free of phenylene diisocyanate.

4. The polymerizable composition for optical materials according to any one of claims 1 to 3, wherein
the polythiol comprises one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol.

5. The polymerizable composition for optical materials according to any one of claims 1 to 4, wherein
the polyene compound comprises one or more selected from the group consisting of triallyl isocyanurate and triallyl cyanurate.

6. The polymerizable composition for optical materials according to any one of claims 1 to 5, wherein
the polymerizable composition has a mercapto group/isocyanate group equivalent ratio of 0.01 to 10.00.

7. The polymerizable composition for optical materials according to any one of claims 1 to 6, wherein
the polymerizable composition has a mercapto group/isocyanate group equivalent ratio of 1.80 to 5.00.

8. The polymerizable composition for optical materials according to any one of claims 1 to 7, wherein
the polymerizable composition further comprises an aliphatic polyisocyanate.

9. The polymerizable composition for optical materials according to claim 8, wherein
the aliphatic polyisocyanate comprises one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.

10. The polymerizable composition for optical materials according to claim 8 or 9, wherein
a content proportion between the aromatic polyisocyanate and the aliphatic polyisocyanate is 1:9 to 9:1.

11. A method for producing a transparent resin, comprising:
a step of polymerizing the polymerizable composition for optical materials according to any one of claims 1 to 10.

12. A transparent resin, obtained by polymerizing the polymerizable composition for optical materials according to any one of claims 1 to 10.

13. A lens base material, obtained by polymerizing the polymerizable composition for optical materials according to any one of claims 1 to 10.

14. The lens base material according to claim 13, wherein
the lens base material has a refractive index of 1.59 or more and 1.68 or less.
